# EUROPÄISCHE PATENTSCHRIFT

(11) **EP 2 771 143 B1**
(45) Veröffentlichungstag und Bekanntmachung des Hinweises auf die Patenterteilung: **30.08.2017**
(21) Anmeldenummer: 12737786.9
(22) Anmeldetag: 18.07.2012
(51) Int. Cl.: B23B 51/00, B23B 51/02, B21H 3/10, B28D 1/14, E21B 10/44

(54) **BOHRER UND HERSTELLUNGSVERFAHREN FÜR EINEN BOHRER**
DRILL AND PRODUCTION METHOD FOR A DRILL
MÈCHE ET PROCÉDÉ DE FABRICATION D'UNE MÈCHE

(30) Priorität: 25.10.2011 DE 102011085187
(43) Veröffentlichungstag der Anmeldung: 03.09.2014
(73) Patentinhaber: HILTI Aktiengesellschaft, 9494 Schaan (LI)
(72) Erfinder: PETERS, Carsten, 9468 Sax (CH); DOMANI, Günther, 88138 Weissensberg (DE); RÖSSNER, Marcel, 6800 Feldkirch (AT); STARKMANN, Josef, 86857 Hurlach (DE)
(74) Vertreter: Hilti Aktiengesellschaft Corporate Intellectual Property
(86) Internationale Anmeldenummer: PCT/EP2012/064078
(87) Internationale Veröffentlichungsnummer: WO 2013/060491

(56) Entgegenhaltungen:
- DE-A1-102005 017 285
- DE-B- 1 104 481
- US-A- 2 728 558
- US-A- 5 690 003
- US-A1- 2008 166 195

## Beschreibung

### GEBIET DER ERFINDUNG

Die Erfindung betrifft einen Bohrer gemäß dem Oberbegriff des Anspruchs 1, sowie ein Herstellungsverfahren gemäß dem Oberbegriff des Anspruchs 4. Ein solcher Bohrer ist aus der US 2,728,558 bekannt und ein solches Herstellungsverfahren ist aus der US 3,608,400 bekannt.

### BESCHREIBUNG DES STANDES DER TECHNIK

Ein Spiralbohrer mit zusätzlichen parallel zu der Achse verlaufenden Bohrmehlnuten ist aus der US 2,728,558 bekannt. Die zusätzlichen axialen Bohrmehlnuten sollen eine besseren Druckausgleich innerhalb eines Bohrloch während eines meißelnden Einsatzes ermöglichen. EP 1 621 274 A1 schlägt ebenfalls eine zusätzliche axiale Nut vor, welche einen Überdruck in einem Bohrloch ausgleichen soll, wenn eine Wendel verstopft ist.

### OFFENBARUNG DER ERFINDUNG

Erfindungsgemäß werden ein Bohrer gemäß dem Anspruch 1 sowie ein Verfahren gemäß dem Anspruch 4 vorggestellt. Ein erfindungsgemäßer Bohrer hat längs einer Achse zwischen einem Bohrkopf und einem Einsteckende einen Schaft. Der Schaft ist mit wenigstens zwei ersten, längs der der Achse verlaufenden Nuten und wenigstens einer zweiten, wendelförmigen Nut versehen. Die ersten Nuten und die zweite Nut kreuzen einander an mehreren Kreuzungen. Eine Nutbreite der ersten Nut nimmt im Verlauf zwischen zwei benachbarten Kreuzungen von einer der Kreuzungen bis zu einer engsten Stelle stetig ab. Nach der engsten Stelle nimmt die Nutbreite bis zu der anderen der Kreuzungen stetig zu.

Die ersten, axialen Nuten haben eine variierende Breite auch außerhalb der Kreuzungen mit den zweiten, wendelförmigen Nuten. Die variierende Breite erweist sich als geeignet, um einen Fluss von Bohrmehl entlang der axialen Nuten zu verringern oder gar zu unterbinden und den Fluss somit längs der wendelförmigen Nuten zu lenken, um einen effizienten Abtransport sicherzustellen.

Der Bohrer kann eine mehrgängige Wendel mit mehreren wendelförmigen Nuten aufweisen, insbesondere kann die Wendel zwei oder vier drehsymmetrisch angeordnete wendelförmigen Nuten enthalten. Bei mehr als einer wendelförmigen Nut kreuzt die erste Nut alternierend die wendelförmigen Nuten, benachbarte Kreuzungen sind somit Kreuzungen der axialen Nut mit verschiedenen wendelförmigen Nuten. Die Zahl der axialen Nuten ist nicht an die Zahl der wendelförmigen Nuten gekoppelt. Insbesondere können genau zwei oder genau vier axialen Nuten vorgesehen sein. Die axialen Nuten sind vorzugsweise drehsymmetrisch zur Achse angeordnet. Der erfindungsgemäße Bohrer weist eine Mehrzahl wendelförmiger Rippen auf. Die Rippen sind durch die ersten Nuten in Umfangsrichtung und die zweiten Nuten längs der Achse begrenzt. Die wendelförmigen Rippen haben in Umfangsrichtung eine konvex gewölbte Oberfläche. Die konvex gewölbten Oberflächen verengen die axialen Nuten zwischen den benachbarten Kreuzungen.

Eine Ausgestaltung sieht vor, dass die zweiten Nuten breiter als die ersten Nuten sind. Ein mittlere Nutbreite der ersten Nuten ist höchstens halb so groß wie eine Nutbreite der zweiten Nuten. Eine erste Fläche, die senkrecht zum Verlauf der axialen Nut und begrenzt durch die axiale Nut und eine zylindrische Hüllkurve des Schafts ist, beträgt höchstens ein Viertel einer zweiten Fläche, die senkrecht zum Verlauf der wendelförmigen Nut und begrenzt durch die wendelförmige Nut und die zylindrische Hüllkurve ist.

Eine Ausgestaltung sieht vor, dass ein radialer Abstand der ersten Nuten zu der Achse gleich oder bis zu 10 % geringer als ein radialer Abstand der zweiten Nut zu der Achse ist. Der Fluss des Bohrmehls erfährt im Bereich der Kreuzungen eine Turbulenz, welche das Strömungsverhalten negativ beeinflussen kann. Eine gleich oder vorzugsweise leicht tiefe zwischen 5 % und 10 % tiefere erste, axiale Nut erweist sich diesbezüglich als vorteilhaft.

Herstellungsverfahren für einen Bohrer mit den Schritten: Formen eines stabförmigen Rohlings, der einen zylindrischen Kern und wenigstens zwei von dem zylindrischen Kern radial vorstehende und längs einer Achse des Rohlings verlaufende Stege und in Umfangsrichtung zwischen den Stegen längs der Achse verlaufende erste Nuten, die den zylindrischen Kern freilegen, aufweist; Längswalzen einer zweiten, die Stege kreuzenden helixförmigen Nut in den Rohling. Auf den gewalzten Rohling wird ein Bohrkopf an einer Stirnseite aufgebracht. Ein anderes Ende des Rohlings wird zu einem Einsteckende umgearbeitet oder mit einem Einsteckende versehen.

Herkömmliche Walzverfahren für Wendeln sind Querwalzverfahren, bei welchen die Rohling um die Achse auf einem Walzprofil abgerollt wird. Diese Verfahren sind in natürlicher Weise auf die helikale Symmetrie der Wendel abgestimmt. Das beschriebene Längswalzverfahren bricht die hohe Symmetrie. Das anfängliche Einbringen der axialen Nuten ermöglicht ein Ausbilden von weitgehend glatten spiralförmigen Nuten. Die Unterbrechungen der wendelförmigen Nuten durch die axialen Nuten erweist sich als tolerierbar für die Funktion der Wendel.

Eine Ausgestaltung sieht vor, dass der stabförmige Rohling ohne Spiegelsymmetrie bezüglich Ebenen, die die Achse enthalten, geformt wird. Die fehlende Spiegelsymmetrie erweist sich als vorteilhaft, um die beim Walzen auftretenden Torsionskräfte zu kompensieren.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer;
- Fig. 2: einen Längsschnitt durch den Schaft des Bohrers in der Ebene II-II,
- Fig. 3: einen Längsschnitt durch den Schaft des Bohrers in der Ebene III-III,
- Fig. 4: einen Querschnitt durch den Schaft des Bohrers in der Ebene IV-IV,
- Fig. 5: einen Querschnitt durch den Schaft des Bohrers in der Ebene V-V,
- Fig. 6: einen zylindrischen Teilschnitt durch den Schaft,
- Fig. 7: einen Querschnitt durch den Schaft des Bohrers in der Ebene VII-VII,
- Fig. 8: Illustration eines Profilwalzens für einen stabförmigen Rohling
- Fig. 9: Illustration eines Längswalzens eines Schafts aus dem Rohling;
- Fig.: 10 Schnitt durch Fig. 9 in der Ebene X-X

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

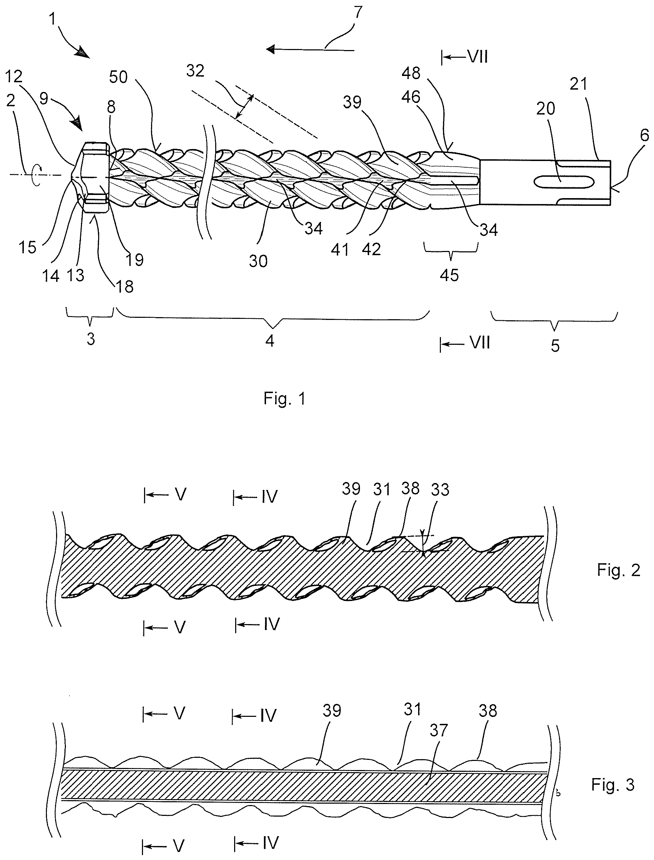

Fig. 1 zeigt einen beispielhaften Bohrer **1,** welcher insbesondere für ein Bohrmeißeln ausgelegt ist. Der Bohrer **1** hat längs einer Achse **2** im Wesentlichen drei aufeinanderfolgende funktionelle Abschnitte, nämlich einen Bohrkopf **3,** einen Schaft **4** und ein Einsteckende **5.** Der Bohrer **1** kann mit seinem Einsteckende **5** in eine Werkzeugmaschine eingesetzt werden. Die Werkzeugmaschine dreht den Bohrer **1** vorzugweise kontinuierlich um die Achse **2** und übt periodisch Schläge auf eine Stirnseite **6** des Einsteckendes **5** aus, welche in Schlagrichtung **7** durch den Bohrkopf **3** in einen Untergrund eingeleitet werden.

Der Bohrkopf **3** hat einen Sitz **8** an dem ein Meißelkörper **9** befestigt ist. Der Meißelkörper **9** steht in Schlagrichtung **7** und in radialer Richtung über den Sitz **8** hinaus, um den Schlagimpuls und Scherkräfte in das Bohrloch einzuleiten. Der Sitz **8** hat beispielsweise die gleichen radialen Abmessungen wie der Schaft **4** und ist vorzugsweise, wie der Schaft **4** aus Stahl gefertigt. Ein Schlitz kann in einer axiale Stirnseite des Sitzes **8** ausgebildet sein, z.B. gefräst sein. Der Meißelkörper **9** ist in den Schlitz eingesetzt und materialschlüssig mit dem Sitz **8** verbunden. Bei einer alternativen Ausgestaltung ist der Sitz als ebene Stirnfläche ausgebildet, auf welcher der Meißelkörper **9** materialschlüssig befestigt ist.

Der dargestellte Meißelkörper **9** hat vier in Schlagrichtung **7** weisende Meißelkanten **12.** Die Meißelkanten **12** sind jeweils als Kreuzungslinie einer im Drehsinn des Bohrers **1** vorauslaufenden Fläche **13** und einer nachlaufenden Fläche **14** gebildet, die beide gegenüber der Achse **2** geneigt und zueinander um wenigstens 60 Grad geneigt sind. Die Meißelkanten **12** verlaufen im Wesentlichen in radialer Richtung, z.B. ausgehend von einer Spitze **15** des Meißelkörpers **9** bis zu einem Rand des Meißelkörpers **9,** wo die Meißelkanten **12** vorzugsweise gegenüber der Spitze **15** in Schlagrichtung **7** zurückgesetzt sind. Eine Neigung der Meißelkanten **12** gegenüber der Achse **2** kann monoton oder aber beispielsweise im Bereich an der Spitze **15** geringer als am Rand sein. Insbesondere kann die Meißelkante **12** am Rand senkrecht zu der Achse **2** verlaufen. Der dargestellte Meißelkörper **9** hat zwei Paare unterschiedlich ausgebildeter Meißelkanten, von den die die Spitze **15** bildenden Meißelkanten als Hauptschneiden und das andere Paar als Nebenschneiden bezeichnet werden. Anstelle von vier kann der Meißelkörper auch zwei, z.B. nur die Hauptschneiden, oder drei oder mehr als vier Meißelkanten aufweisen. An die in Schlagrichtung **7** weisenden Meißelkanten **12** schließt sich am Rand des Meißelkörpers **9** eine Abbruchkante **18** an, welche längs der Achse **2** verläuft. Die Abbruchkante **18** steht radial über den Sitz **8** hinaus. Der Meißelkörper **9** ist an seinem Umfang mit parallel zur Achse **2** verlaufenden Abfuhrrinnen **19** versehen, entlang welchen das Bohrmehl aus dem Bohrloch transportiert werden kann. Die Abfuhrrinnen **19** sind in Umfangsrichtung zwischen den Meißelkanten **12** angeordnet. Der Meißelkörper **9** ist vorzugsweise ein zusammenhängender Körper aus gesintertem Hartmetall, das z.B. Wolframkarbid und einen metallischen Binder enthält.

Das dargestellte Einsteckende **5** ist speziell für einen drehmeißelnden Bohrer **1** ausgelegt. Der im Wesentlichen zylindrische Abschnitt am Ende des Bohrers **1** hat einen Durchmesser, welcher dem festen Innendurchmesser eine Werkzeugaufnahme handelsüblicher Werkzeugmaschinen entspricht. Die Werkzeugaufnahmen können Stege oder Bolzen für eine verbesserte Drehmomentübertragung aufweisen, welche in entsprechende Nuten **20** für eine Drehmitnahme des Einsteckendes **5** eingreifen. Die axial offene Nuten 1**17** sind entgegen der Schlagrichtung **7** offen, indem sie bis zu der Stirnseite **6** des Bohrers reichen. Eine Verriegelung des Bohrers **1** kann in der Werkzeugaufnahme durch weitere längs der Achse **2** axial geschlossene Nuten **21** für eine Verrieglung des Einsteckendes **5** erfolgen. Andere Bohrer **1** können ein rein zylindrisches Einsteckende ohne Nuten oder ein Einsteckende mit vorstehenden Stegn statt der Drehmitnahme-Nuten haben.

Der Bohrkopf **3** und das Einsteckende **5** sind starr über den Schaft **4** verbunden. Der Schaft **4** überträgt ein Drehmoment von dem Einsteckende **5** auf den Bohrkopf **3,** ggf. auch einen axialen Impuls von dem Einsteckende **5** auf den Bohrkopf **3.** Der Bohrkopf **3** kann für die Länge (Abmessung längs der Achse **2**) des Schaftes **4** in ein Bohrloch eingeführt werden. Zweckmäßigerweise ist der Schaft **4** ein Vielfaches länger als der Bohrkopf **3.**

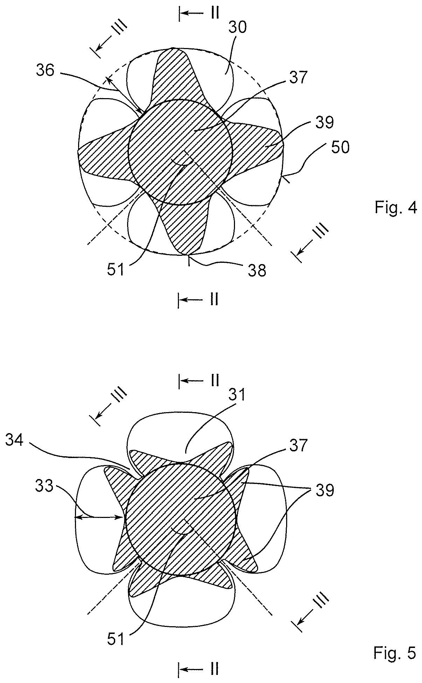

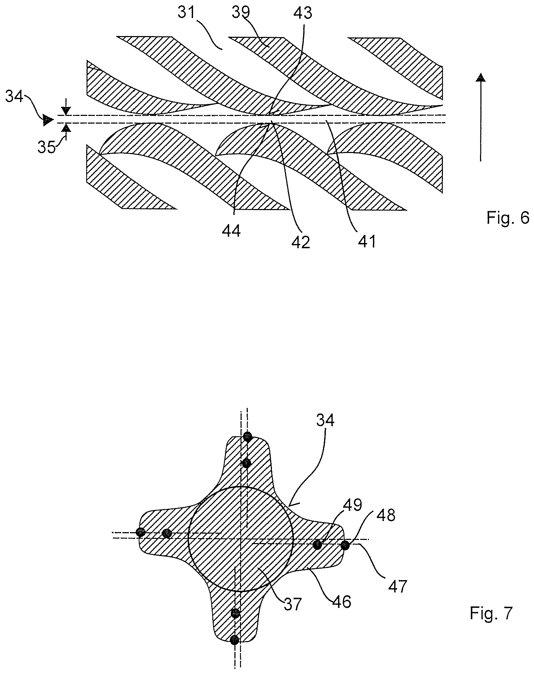

Der Schaft 4 ist in mehreren geschnittenen Darstellung illustriert, Fig. 2 zeigt einen Längsschnitt in der Ebene II-II, Fig. 3 einen Längsschnitt in der Ebene III-III, welche um 45 Grad gegenüber der Ebene II-II gedreht ist, Fig. 4 einen Querschnitt in der Ebene IV-IV, Fig. 5 einen Querschnitt in der Ebene V-V und Fig. 7 einen Querschnitt in der Ebene VII-VII. Fig. 6 zeigt einen kleinen Ausschnitt des Schafts in einem konstanten Abstand zur Achse 2.

Der Schaft **4** hat vier Wendelgänge **30,** welche zum Abtransport des Bohrguts aus dem Bohrloch dienen. Der beispielhafte Schaft **4** weist eine vierzählige Drehsymmetrie auf, welche durch die vier Wendelgänge **30** vorgegeben ist. Wendelförmige Nuten **31** der Wendelgänge **30** verlaufen durchgehend schrauben- oder spiralförmig um den Schaft 4. Ein Querschnittsprofil der wendelförmigen Nuten **31** ist beispielsweise halbkreis- oder kreissegmentförmig. Eine Ganghöhe bzw. Steigung der Wendelgänge ist vorzugsweise konstant und kann in anderen Ausgestaltung kontinuierlich längs der Achse **2** variiert sein. Die Nuten **31** reichen bis zu dem Bohrkopf **3** und gehen vorzugsweise glatt in die Abfuhrrinnen **19** des Bohrkopfs **3** über. Eine Nutbreite **32,** gemessen senkrecht zum spiralförmigen Verlauf der Nut **31,** und eine Nuttiefe **33,** gemessen in radialer Richtung, sind ausreichend dimensioniert, um das Bohrmehl zu fördern. Die Zahl der Wendelgänge **30** ist beispielhaft und vorzugsweise gleich der Zahl der Meißelkanten **12** gewählt.

Vier weitere parallel zur Achse **2** verlaufende Nuten **34** (axiale Nuten) sind in den Schaft **4** eingebracht. Die axialen Nuten **34** verlaufen wenigstens über die gesamte axiale Länge der wendelförmigen Nuten **31**. Beispielsweise beginnen die axialen Nuten **34** am Bohrkopf **3** und erstrecken sich längs der Achse **2** weiter als die wendelförmigen Nuten **30**. Die wendelförmigen Nuten **31** und die axialen Nuten **34** kreuzen einander mehrfach über die Länge des Schafts **4.** Eine Nutbreite **35** der axialen Nuten **34** ist deutlich geringer als die Nutbreite **32** der wendelförmigen Nuten **31**, z.B. mit höchstens einer Hälfte des Öffnungswinkels. Insbesondere ist eine von einem Bohrloch und den wendelförmigen Nuten **31** begrenztes Volumen deutlich größer als ein entsprechendes von den axialen Nuten **34** begrenztes Volumen. Die axialen Nuten **34** nehmen keinen Einfluss auf den Abtransport des Bohrguts durch die wendelförmigen Nuten **31**. Eine Nuttiefe **36** der axialen Nuten **34** ist etwa gleich oder bis zu 10 % größer als die Nuttiefe **33** der wendelförmigen Nuten **31**. Der Verlauf der wendelförmigen Nuten **31** wird durch die axialen Nuten **34** nur minimal beeinflusst, insbesondere nicht durch am Nutboden lokale querstehende Erhebungen aber auch nicht durch tiefe lokale querstehende Rillen, welche den Abtransport des Bohrguts behindern könnten. Ein Nutboden der axialen Nuten **34** legt vorzugsweise einen zylindrischen Kern **37** des Schafts **4** frei.

Die Wendelgänge **30** haben keine zusammenhängende Wendelrücken **38,** sondern die Wendelrücken **38** sind unterbrochen durch die axialen Nuten **34** jeweils aus mehreren Rippen **39** zusammengesetzt. Die Rippen **39** eines Wendelrückens **38** sind längs einer spiralförmigen Linie, d.h. entlang dem Wendelrücken **38,** auf dem zylindrischen Kern **37** des Schafts **4** angeordnet. Die Rippen **39** sind längs der Achse **2** durch die benachbarten wendelförmigen Nuten **30** begrenzt, und weisen somit deren Steigung gegenüber der Achse **2** auf. In Umfangsrichtung sind die Rippen **39** durch in Umfangsrichtung benachbarte der axialen Nuten **34** begrenzt. Die axialen Nuten **34** haben einen wellenförmigen Rand, wodurch die Nutbreite **35** der axialen Nuten **34** längs der Achse **2** ohne Kanten aufzuweisen moduliert ist. Insbesondere ergeben sich keine Kanten sondern glatte Übergänge an den Kreuzungen **41** der wendelförmigen Nuten **31** und der axialen Nuten **34**. Angrenzend an die Kreuzungen **41** hat die axiale Nut **34** ihrer größte Nutbreite. Im Verlauf zwischen zwei Kreuzungen **41** nimmt die Nutbreite von der ersten der Kreuzungen **41** ab, bis eine engste Stelle **42** erreicht ist, und nimmt nach der engsten Stelle **42** bis zu der zweiten Kreuzung **41** zu. Die Abnahme bzw. Zunahme der Nutbreite **35** erfolgt stetig, d.h. ohne Sprünge. Ferner erfolgt die Änderung monoton zwischen der engsten Stelle **42** und den Kreuzungen **41,** d.h. die axiale Nut **34** wird nicht lokal nochmals breiter. Die im Drehsinn vorauslaufenden Oberflächen **43** und die im Drehsinn nachlaufenden Oberflächen **44** der Rippen **39,** welche die axialen Nut **34** in Umfangsrichtung begrenzen, sind glatt und bogenförmig, wobei die Bogen in Richtung der jeweils gegenüberliegenden Oberfläche **43, 44** der benachbarten Rippe **39** weisen.

Die vorauslaufenden Oberflächen **43** und die nachlaufenden Oberflächen **44** der Rippen **39** können unterschiedlich stark gewölbt sein, insbesondere kann die nachlaufende Oberfläche **44** einen kleineren Krümmungsradius aufweisen. Die axialen Nuten **34** können daher asymmetrisch ausgestaltet sein, und bezogen auf den Bereich geringster Nutenbreite sich stärker im Drehsinn der Wendel als gegen deren Drehsinn erweitern.

Eine weitere Asymmetrie liegt im Anfangsbereich **45** der axialen Nuten **34** vor, in welchem keine wendelförmigen Nuten **31** eingebracht sind. Zwischen den axialen Nuten **34** sind radial vorstehende Stege **46** ausgebildet. Eine Ebene **47** durch den Rücken **48** der Stege **46** und deren Schwerpunkt **49** ist zwar parallel aber versetzt zu der Achse **2.**

Die Rippen **39** der Wendel haben jeweils eine spiralförmige Scheitellinie **50,** welche entlang der höchsten Punkte verläuft. Die Scheitellinie **50** ist die Grenzlinie, von welcher ausgehend die Oberfläche der Rippe **39** sich in beiden Richtungen parallel zu der Achse **2** der Achse **2** nähert. Die Scheitellinie **50** kann über einen Winkelbereich **51** von höchstens 80 Grad, und vorzugsweise wenigstens 30 Grad, z.B. wenigstens 45 Grad, an einem den Schaft **4** einhüllenden Zylinder anliegen. Ein Krümmungsradius der auf eine zur Achse **2** senkrecht projizierten Scheitellinie **50** ist in diesem Winkelbereich **51** gleich dem größten radialen Abstand der Scheitellinie **50** zu der Achse **2.**

Die axialen Nuten **34** können in einer weiteren Ausführungsform leicht spiralförmig um den Schaft **4** verlaufen, wobei die axialen Nuten sich vorzugsweise höchstens einmal um die Schaft **4** winden. Eine Windungszahl der axialen Nuten **34** ist um eine Größenordnung geringer als die Windungszahl der wendelförmigen Nuten **31**. Vorzugsweise ist ein Drehsinn der axialen Nuten einem Drehsinn der wendelförmigen Nuten **31** entgegengesetzt.

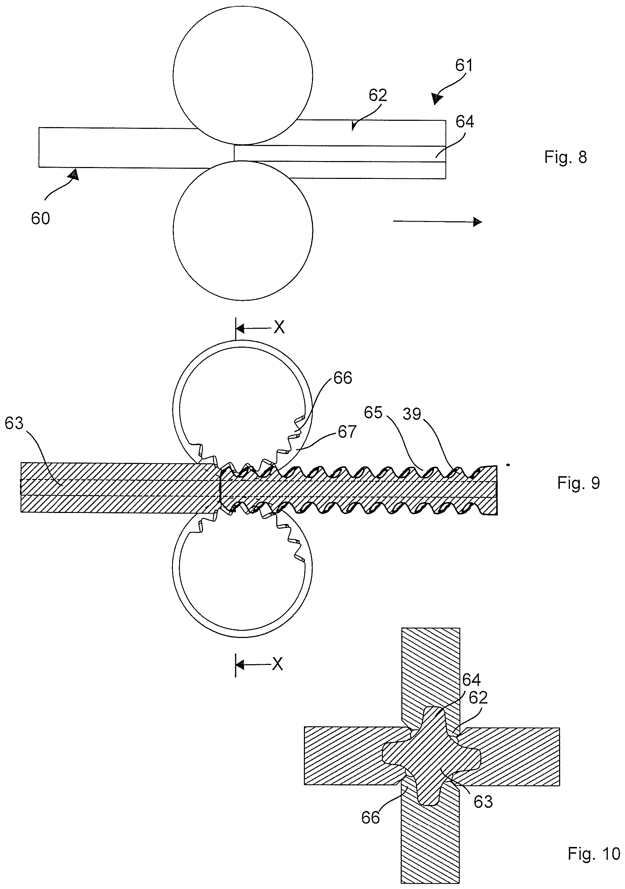

Ein exemplarisches Herstellungsverfahren des Bohrers **1** wird nachfolgend mit Bezug auf die Figuren 8 und 9 beschrieben, Fig. 10 zeigt einen Schnitt in der Ebene X-X. Beispielsweise von einem Endlosdraht wird ein zylindrischer Stab **60** abgeschnitten, dessen Länge etwa der Länge des herzustellenden Bohrers **1** entspricht. Ein Querschnittsfläche des Stabs ist etwa gleich einer mittleren Querschnittsfläche der herzustellenden Wendel.

Ein erstes Walzverfahren formt den zylindrischen Stab **60** in einen nicht-zylindrisch prismatischen Rohling **61** um. Die Walzen drücken in den zylindrischen Stab vier längs der Achse **2** verlaufende Nuten **62** ein. Die Nuten **62** sind vorzugsweise von gleicher Gestalt und zueinander um 90 Grad um die Achse **2** versetzt angeordnet. Der entstehende Rohling **61** hat entsprechend eine vierzählige Symmetrie, die der Drehsymmetrie der herzustellenden Wendel entspricht. Der Rohling **61** hat einen zylindrischen Kern **63,** welcher sich längs der Achse **2** erstreckt und im Bereich der Nuten **62** freigelegt ist. Radial von dem zylindrischen Kern **63** abstehend bilden sich vier längs der Achse **2** verlaufende Stege **64** aus. Der Rohling **61** ist vorzugsweise zu keiner Ebene spiegelsymmetrisch, die die Achse **2** enthält. Beispielsweise können die Steg **64** gegenüber dem zylindrischen Kern **63** geneigt sein. Das erste Walzverfahren kann ein Quenivalzen, d.h. Walzprofile rollen entlang der Umfangsrichtung des Stabs ab, oder ein Längswalzen, d.h. Walzprofile rollen längs der Achse ab, umfassen. Alternativ zu einem Walzverfahren, kann das Profil auch per Strangpressen eingeformt werden.

Ein zweites Walzverfahren formt in die Steg **64** wendelförmige Nuten **65** ein. Bei dem verwendeten Längswalzen werden Walzprofile längs der Achse **2** an dem Rohling **61** abgerollt. Insgesamt sind gleichzeitig vier Walzprofile **66** im Einsatz, von den jedes genau einen der Steg **64** in längs der Achse **2** aufeinanderfolgende wendelförmige Rippen **39** umformt. Das Walzprofil umschließt lokal die Rippe **64** und greift mit seinen äußeren Flanken **67** in die dem Steg **64** benachbarten Nuten **62** ein. Die vier Walzprofile berühren einander mit ihren Flanken **67** innerhalb der Nut **62** und bilden einen geschlossenen Ring um den Rohling **61.** Die Flanken **67** reichen vorzugsweise nicht bis zu einem Boden der Nuten **62.**

Der umgeformte Rohling mit den Rippen **39** wird an einer Stirnseite mit dem Sitz für den Bohrkopf **3** versehen. Die Stirnseite kann beispielsweise zu einer ebenen Fläche abgefräst werden. Der Bohrkopf **3** wird materialschlüssig und ggf. formschlüssig an dem Sitz befestigt. An dem gegenüberliegenden Ende des Rohlings wird das Einsteckende **5** ausgebildet, beispielsweise durch Walzen oder Fräsen der Nuten.

## Patentansprüche

1. Bohrer, der längs einer Achse **(2)** zwischen einem Bohrkopf **(3)** und einem Einsteckende **(5)** einen Schaft **(4)** mit wenigstens zwei ersten, längs der der Achse **(2)** verlaufenden Nuten **(34)** und wenigstens einer zweiten, wendelförmigen Nut **(31)** aufweist, wobei die ersten Nuten **(34)** und die zweite Nut **(31)** einander an mehreren Kreuzungen **(41)** kreuzen und **dadurch gekennzeichnet, dass** eine Nutbreite **(35)** der ersten Nuten **(34)** im Verlauf zwischen zwei benachbarten Kreuzungen **(41)** von einer der Kreuzungen **(41)** bis zu einer engsten Stelle **(42)** stetig abnimmt und danach bis zu der anderen der Kreuzungen **(41)** stetig zunimmt, und dass der Bohrer eine Mehrzahl wendelförmiger Rippen (39) aufweiset, die durch die ersten Nuten **(34)** in Umfangsrichtung und die zweiten Nuten **(31)** längs der Achse **(2)** begrenzt sind, und die wendelförmigen Rippen **(39)** eine in Umfangsrichtung konvex gewölbte Oberfläche **(43, 44)** aufweisen.

2. Bohrer nach Anspruch 1, **dadurch gekennzeichnet, dass** die zweiten Nuten **(31)** breiter als die ersten Nuten **(34)** sind.

3. Bohrer nach einem der vorhergehenden Ansprüche, **dadurch gekennzeichnet, dass** ein radialer Abstand der ersten Nuten **(34)** zu der Achse **(2)** gleich oder bis zu 30 % geringer als ein radialer Abstand der zweiten Nut **(31)** zu der Achse **(2)** ist.

4. Herstellungsverfahren für einen Bohrer mit dem Schritt Formen eines stabförmigen Rohlings, der einen zylindrischen Kern und wenigstens zwei von dem zylindrischen Kern radial vorstehende und längs einer Achse des Rohlings verlaufende Stege und wenigstens zwei in Umfangsrichtung zwischen den Stegen längs der Achse verlaufende erste Nuten, die den zylindrischen Kern freilegen, aufweist,
**gekennzeichnet durch** die Schritte
Längswalzen einer zweiten, die Stege kreuzenden helixförmigen Nut in den Rohling und Aufbringen eines Bohrkopfs an einer Stirnseite des Rohlings.

5. Herstellungsverfahren nach Anspruch 4, **dadurch gekennzeichnet, dass**
der stabförmige Rohling ohne Spiegelsymmetrie bezüglich Ebenen, die die Achse (2) enthalten, geformt wird.

## Claims

1. Drill, which has a shaft **(4)** along an axis **(2)** between a drill head **(3)** and an end for insertion **(5)** with at least two first grooves **(34)** running along the axis **(2)** and at least one second helical groove **(31),** in which the first grooves **(34)** and the second groove **(31)** cross each other at several intersections **(41)** and **characterised in that** a groove width **(35)** of the first grooves **(34)** running between two neighbouring intersections **(41)** constantly decreases from one of the intersections **(41)** to a narrowest point **(42)** and then constantly increases to the other of the intersections **(41)** and that the drill has a large number of helical ribs **(39),** which are limited by the first grooves **(34)** in the circumferential direction and the second grooves **(31**) along the axis **(2)** and the helical ribs **(39)** have a convex curved surface **(43, 44)** in the circumferential direction.

2. Drill according to claim 1, **characterised in that** the second grooves **(31)** are wider than the first grooves **(34).**

3. Drill according to one of the previous claims, **characterised in that** a radial distance of the first grooves **(34)** to the axis is the same or up to 30% smaller than a radial distance of the second groove **(31)** to the axis **(2).**

4. Production method for a drill with the step of forming a rod-shaped blank, which has a cylindrical core and at least two fins protruding radially from the cylindrical core and running along an axis of the blank and at least two first grooves running along the axis in the circumferential direction between the fins, which expose the cylindrical core,
**characterised by** the steps of longitudinal rolling of a second helical groove crossing the fins in the blank and applying a drill head to an end face of the blank.

5. Production method according to claim 4, **characterised in that** the rod-shaped blank is formed without mirror symmetry with reference to planes, which contain the axis **(2).**

## Revendications

1. Foret comportant une tige (4) le long d'un axe (2) entre une tête de perçage (3) et une extrémité insérable (5), la tige ayant au moins deux premières goujures (34) s'étendant le long de l'axe (2) et au moins une seconde goujure hélicoïdale (31), dans lequel les premières goujures (34) et la seconde goujure (31) se croisent mutuellement en plusieurs croisements (41) et **caractérisé en ce qu'**une largeur de goujure (35) des premières goujures (34) diminue constamment sur une zone entre deux croisements (41) voisins depuis l'un des croisements (41) jusqu'à un endroit le plus étroit (42) et augmente ensuite constamment jusqu'à l'autre des croisements (41), et **en ce que** le foret comporte une pluralité de nervures hélicoïdales (39) qui sont limitées par les premières goujures (34) dans une direction circonférentielle et par les secondes goujures (31) le long de l'axe (2), et les nervures hélicoïdales (39) comportent une surface bombée de manière convexe (43, 44) dans la direction circonférentielle.

2. Foret selon la revendication 1, **caractérisé en ce que** les secondes goujures (31) sont plus larges que les premières goujures (34).

3. Foret selon l'une des revendications précédentes, **caractérisé en ce qu'**une distance radiale entre les premières goujures (34) et l'axe (2) est égale ou jusqu'à 30 % inférieure à une distance radiale entre la seconde goujure (31) et l'axe (2).

4. Procédé de fabrication d'un foret comportant l'étape consistant à former une ébauche en forme de barre comportant un noyau cylindrique et au moins deux bandes faisant radialement saillie à partir du noyau cylindrique et s'étendant le long d'un axe de l'ébauche et au moins deux premières goujures s'étendant dans la direction circonférentielle entre les bandes le long de l'axe, lesquelles premières goujures exposant le noyau cylindrique, **caractérisé par** les étapes consistant à :
laminer longitudinalement une seconde goujure hélicoïdale croisant les bandes dans l'ébauche et appliquer une tête de perçage sur une face avant de l'ébauche.

5. Procédé de fabrication selon la revendication 4, **caractérisé en ce que** l'ébauche en forme de barre est formée sans symétrie spéculaire par rapport à des plans contenant l'axe (2).
